# EUROPÄISCHE PATENTANMELDUNG

(11) **EP 1 826 507 A2**
(43) Veröffentlichungstag der Anmeldung: **29.08.2007**
(21) Anmeldenummer: 07102353.5
(22) Anmeldetag: 14.02.2007
(51) Int. Cl.: F24J 2/52, E04D 3/08, H01L 31/042

(54) **Befestigungsvorrichtung für die Befestigung von Solarpaneelen an einer Montageschiene**

(30) Priorität: 23.02.2006 DE 102006000089
(71) Anmelder: HILTI Aktiengesellschaft, 9494 Schaan (LI)
(72) Erfinder: Rubio, Daniel, 28007, Madrid (ES); Dischinger, Jakob, 82272, Eismerszell (DE); Hoffmann, Armin, 86899, Landsberg (DE)
(74) Vertreter: Wildi, Roland

(57) **Zusammenfassung**

Die Befestigungsvorrichtung (11) für die Befestigung von Solarpaneelen (1) an einer Montageschiene (2) umfasst ein Niederhalteelement (12), ein in eine Aufnahmenut (5) der Montageschiene (2) einführbares und darin verdrehbares Hintergreifteil (13), eine Befestigungsschraube (14) und eine Schraubenfeder (15). Die Befestigungsschraube (14) weist einen Schraubenschaft (17) auf, der bereichsweise mit einem Aussengewinde (18) versehen ist und mit einem Innengewinde an einer Öffnung (21) im Hintergreifteil (13) in Eingriff bringbar ist. Die Schraubenfeder (15) erstreckt sich entlang des Schraubenschafts (17) und ist zwischen dem Niederhalteelement (12) und dem Hintergreifteil (13) angeordnet. Die Schraubenfeder (15) ist an einem ersten Lagerpunkt an dem Niederhalteelement (12) und an einem zweiten Lagerpunkt an dem Hintergreifteil (13) gehalten. Zudem verläuft die Wicklung der Schraubenfeder (15) in Drehrichtung des Aussengewindes (18) der Befestigungsschraube (14) und ist spielfrei an dem Schraubenschaft (17) angeordnet.

## Beschreibung

Die Erfindung betrifft eine Befestigungsvorrichtung für die Befestigung von Solarpaneelen an einer Montageschiene, der im Oberbegriff des Patentanspruchs 1 genannten Art.

Um Solaranlagen auf Dachflächen, insbesondere nachträglich zu installieren, werden Tragsysteme aus jeweils eine Montageöffnung aufweisenden Montageschienen vorgesehen, welche die einzelnen Solarpaneelen in einem Abstand zu der Dachbedeckung, wie Dachziegeln, aufnehmen. Mittels einzelner Befestigungsvorrichtungen sind die einzelnen Solarpaneelen gegen Wind- und Schneelasten fixiert.

Aus der DE 296 16 947 U1 ist ein Befestigungssystem für Solarpaneelen bekannt, bei dem eine Montageschiene als eine von Rändern begrenzte Montageöffnung eine längs verlaufende Nut aufweist, in welche ein Mutterelement mit einem Innengewinde seitlich eingeschoben werden muss. Mittels eines Niederhalteelementes und Verspannen einer durch dieses hindurchgeführten Befestigungsschraube, die ein Angriffsmittel sowie einen davon abragenden Schraubenschaft aufweist und die in das Innengewinde im Mutterelement eingreift, wird das Solarpaneel an der Montageschiene festgelegt. Durch die Längserstreckung der Befestigungsschraube verläuft die Längsachse der Befestigungsvorrichtung.

Nachteilig an der bekannten Lösung ist, dass das Einführen des Mutterelementes in die längsverlaufende Nut, insbesondere bei langen Montageschienen, und die Positionierung des Mutterelementes für den Eingriff der Befestigungsschraube aufgrund der Vielzahl einzelner, loser Teile umständlich ist.

Aus der DE 296 21 873 U1 ist ein Befestigungssystem für C-förmige Montageschienen bekannt, das ein Niederhalteelement, ein Hintergreifteil, eine Befestigungsschraube sowie eine Schraubenfeder umfasst. Das Hintergreifteil weist eine Breitenerstreckung zum Einführen des Hintergreifteils in die Aufnahmeöffnung sowie eine Längenerstreckung zum Hintergreifen der Ränder der Aufnahmeöffnung nach einer Verdrehung des Hintergreifteils auf. Weiter weist das Hintergreifteil eine Dicke auf, die kleiner als die Höhe der C-förmigen Aufnahme ausgebildet ist. Die Befestigungsschraube weist ein Angriffsmittel und einen Schraubenschaft auf, der bereichsweise mit einem Aussengewinde versehen ist und mit einem Innengewinde an einer Öffnung im Hintergreifteil in Eingriff bringbar ist. Die Schraubenfeder erstreckt sich entlang des Schraubenschafts und ist zur Beabstandung zwischen dem Niederhalteelement sowie dem Hintergreifteil zur Beabstandung derselben angeordnet. Damit das Hintergreifteil nach dem Einführen in die Aufnahmeöffnung mittels einer Drehung der Befestigungsschraube zum Hintergreifen der Ränder der Aufnahmeöffnung ausgerichtet werden kann und anschliessend das Befestigungssystem verspannt werden kann, ist als lösbare Fixierung beispielsweise am Gewinde des Hintergreifteils eine Reibschicht aufgebracht.

Nachteilig an der bekannten Lösung ist, dass das Befestigungssystem z. B. auch bei geringen Abständen der Solarpaneele untereinander einfach setzbar sein muss. Für eine ausreichende Gebrauchstauglichkeit eines solchen Befestigungssystems muss einerseits das Hintergreifteil zum Setzen mit der Befestigungsschraube ausreichend fest verbunden und andererseits zum Verspannen der Befestigungsanordnung von der Befestigungsschraube wieder leicht lösbar sein. Das Losbrechmoment muss derart gering sein, dass die Befestigungsschraube von Hand angezogen werden kann. Diese unterschiedlichen Erfordernisse können bei dem Befestigungssystem gemäss der DE 296 21 873 U1 nur mit einem zusätzlichen Montageaufwand bei der Herstellung der Befestigungsanordnung abgedeckt werden.

Aufgabe der Erfindung ist es, eine Befestigungsvorrichtung für die Befestigung von Solarpaneelen an einer Montageschiene zu schaffen, die auch bei geringen Abständen der zu befestigenden Paneele einfach setzbar ist.

Die Aufgabe ist durch die Merkmale des unabhängigen Anspruchs gelöst. Vorteilhafte Weiterbildungen sind in den Unteransprüchen dargelegt.

Gemäss der Erfindung ist die Schraubenfeder zur Übertragung eines Drehmomentes von dem Niederhalteelement auf das Hintergreifteil an einem ersten Lagerpunkt an dem Niederhalteelement und an einem zweiten Lagerpunkt an dem Hintergreifteil gehalten und weist eine in Drehrichtung des Aussengewindes der Befestigungsschraube verlaufende Wicklung auf. Die Schraubenfeder ist spielfrei an dem Schraubenschaft angeordnet.

Die erfindungsgemässe Befestigungsvorrichtung wird vorteilhaft vormontiert dem Anwender zur Verfügung gestellt und ist leicht zu montieren. Dies ist ein wesentlicher Vorteil, da Solarpaneele oftmals auf Schrägdächern in grosser Höhe montiert werden. Die Solarpaneele werden auf den Montageschienen mit den gewünschten Abständen verteilt. Die Befestigungsvorrichtung weist aufgrund der Schraubenfeder im Montagezustand vorteilhaft einen Abstand zwischen dem Niederhalteteil und dem Hintergreifteil auf, der grösser als die Dicke der zu fixierenden Paneele ist.

Zum Einführen des Hintergreifteils in die Aufnahmeöffnung weist das Hintergreifteil eine Breitenerstreckung, die kleiner als der Abstand der Ränder der Aufnahmeöffnung der Montageschiene zueinander ist. Zum Hintergreifen der Ränder der Aufnahmeöffnung nach einer Verdrehung des Hintergreifteils weist dieses eine Längenerstreckung auf, die grösser als der Abstand der Ränder der Aufnahmeöffnung zueinander ist.

Beim Verdrehen des Niederhalteteils zieht sich die einerseits an dem Niederhalteelement und andererseits an dem Hintergreifteil gehaltene Schraubenfeder unter Reduktion des Schraubenfederdurchmessers zusammen, bis die Schraubenfeder zumindest bereichsweise vollständig an dem Schraubenschaft anliegt, wobei die Drehbewegung des Niederhalteelementes auf das Hintergreifteil übertragen wird. Dabei kann die Schraubenfeder die Drehbewegung des Niederhalteelementes zuerst reibschlüssig und anschliessend kraftschlüssig auf den Schraubenschaft übertragen. Die Schraubenfeder weist vorteilhaft einen inneren Schraubendurchmesser auf, der ein wenig kleiner als der Durchmesser des Schraubenschafts der Befestigungsschraube ist. Dabei wird die frei drehbar am Niederhalteelement gelagerte Befestigungsschraube und somit das an dem Schraubenschaft über die Gewinde lösbar festgelegte Hintergreifteil mitgenommen und in die Position zum Hintergreifen der die Aufnahmeöffnung begrenzenden Ränder gedreht.

Die Wickelrichtung der Schraubenfeder in Drehrichtung des Aussengewindes der Befestigungsschraube gewährleistet die Reduktion des Schraubenfederdurchmessers beim Drehen des Niederhalteteils. Unter Drehrichtung des Aussengewindes wird in diesem Zusammenhang die Gangrichtung des Gewindes verstanden. Ist das Aussengewinde ein Rechtsgewinde und hält man die Befestigungsschraube senkrecht, so steigen die Gewindegänge und somit die Wicklungen der Schraubenfeder nach rechts an. Ist das Aussengewinde ein Linksgewinde und hält man die Befestigungsschraube senkrecht, so steigen die Gewindegänge und somit die Wicklungen der Schraubenfeder nach links an.

Da die Schraubenfeder bereits im vormontierten Zustand der Befestigungsvorrichtung eng an dem Schraubenschaft anliegt, erfolgt bereits nach einer geringen Drehbewegung des Niederhalteteils die Übertragung dieser Drehbewegung auf das Hintergreifteil.

Die seitlichen Begrenzungen im Innern der Aufnahmenut begrenzen die Drehbewegung des Hintergreifteils. Das Niederhalteteil wird entsprechend der Lage der Solarpaneele ausgerichtet und anschliessend die Befestigungsvorrichtung mittels der Befestigungsschraube verspannt. Die erfindungsgemässe Befestigungsvorrichtung ist einfach zu fertigen und einfach zu montieren, wobei zum Fixieren der Solarpaneele lediglich ein Verspannwerkzeug erforderlich ist.

Vorzugsweise ist zur Ausbildung des ersten Lagerpunktes für die Schraubenfeder ein Anschlag an dem Niederhalteelement vorgesehen, an den ein erstes Ende der Schraubenfeder anliegt. Vorteilhaft weist das Niederhalteteil eine in Längsachse der Befestigungsschraube ausgerichtete Aufnahme auf, wobei eine der seitlichen Begrenzungswände dieser Aufnahme den Anschlag für das erste Ende der Schraubenfeder bildet. Vorteilhaft weist das erste Ende der Schraubenfeder einen abgebogenen Abschnitt auf, der mit dem Anschlag in Anlage bringbar ist.

In einer alternativen Ausführungsform ist zur Ausbildung des ersten Lagerpunktes für die Schraubenfeder eine Öffnung in dem Niederhalteelement ausgebildet, in welche ein erstes Ende der Schraubenfeder eingreift. Die Öffnung ist beispielsweise als Bohrung ausgebildet, in die das erste Ende der Schraubenfeder eingesteckt wird. Alternativ ist die Öffnung als vertiefte Nut ausgebildet, in der das erste Ende der Schraubenfeder mittels einer kraftschlüssigen Halterung, z. B. mittels einer Klemmung fixiert wird. Vorteilhaft weist das erste Ende der Schraubenfeder einen abgebogenen Abschnitt auf, der in die Öffnung einführbar ist.

Vorzugsweise ist zur Ausbildung des zweiten Lagerpunktes für die Schraubenfeder eine Ausnehmung an dem Hintergreifteil ausgebildet, in welche ein zweites Ende der Schraubenfeder eingreift. Die Ausnehmung ist beispielsweise als Bohrung ausgebildet, in die das zweite Ende der Schraubenfeder eingesteckt wird. Alternativ ist die Ausnehmung als vertiefte Nut ausgebildet, in der das erste Ende der Schraubenfeder mittels einer kraftschlüssigen Halterung, z. B. mittels einer Klemmung fixiert wird. Vorteilhaft weist das zweite Ende der Schraubenfeder einen abgebogenen Abschnitt auf, der in die Ausnehmung eingreift.

Bevorzugt ist die Ausnehmung an der Seite entlang der Längenerstreckung des Hintergreifteils ausgebildet, welche beispielsweise gefräst oder ausgestanzt wird.

Vorzugsweise ragt zumindest ein Teil des zweiten Endes der Schraubenfeder über eine von dem Hintergreifteil aufgespannte Ebene hinaus. Der hinausragende Teil des zweiten Endes der Schraubenfeder ist vorteilhaft derart an dem Hintergreifteil angeordnet, dass beim Einführen des Hintergreifteils in die Aufnahmenut dieses Ende der Schraubenfeder entgegen der Einführrichtung gezwungen wird. Sobald beim Verdrehen des Hintergreifteils das zweite Ende der Schraubenfeder in einen Freiraum ausweichen kann, kehrt dieses in seine ursprüngliche Stellung zurück und bildet eine Rückdrehsicherung für die Befestigungsvorrichtung. Der hinausragende Teil des zweiten Endes der Schraubenfeder verhindert beim Lösen einer verspannten Befestigungsvorrichtung, dass sich das Hintergreifteil aus seiner die begrenzenden Ränder der Aufnahmeöffnung hintergreifenden Stellung herausdrehen kann. Bei einem erneuten Lösen der Befestigungsvorrichtung weitet sich der Schraubenfederdurchmesser auf, wobei aufgrund der Drehmomentübertragung von Schraubenfeder das Hintergreifteil entgegen der Eindrehrichtung der Befestigungsvorrichtung bewegen. Dabei könnte das Hintergreifteil in eine Stellung kommen, in der das Hintergreifteil die Ränder der Aufnahmeöffnung nicht mehr hintergreift. Mittels der geschaffenen Rückdrehsicherung wird dies verhindert. Die erfindungsgemässe Befestigungsvorrichtung kann nach dem Verspannen einfach wieder gelöst, gegebenenfalls verschoben und ohne besonderen Aufwand erneut verspannt werden.

Bevorzugt ist das zweite Ende der Schraubenfeder U-förmig ausgebildet ist, wobei der die Schenkel verbindende Abschnitt des zweiten Endes der Schraubenfeder über die von dem Hintergreifteil aufgespannte Ebene hinausragt und wobei die Schenkel bereichsweise in der Ausnehmung an dem Hintergreifteil liegen. Infolge der vorhandenen Abbiegungen ist ein unerwünschtes Verhaken des freien Endes der Schraubenfeder beispielsweise an Kanten oder Ebenen der Montageschiene während der Montage des Befestigungssystems weitgehend ausgeschlossen.

Vorzugsweise ist ein Teil der Schraubenfeder, der benachbart zum Hintergreifteil angeordnet ist, spiralförmig flach ausgebildet und weist einen Verbindungsabschnitt auf, der in die Abbiegung des zweiten Endes der Schraubenfeder übergeht. Mit dieser Ausgestaltung des zweiten Endes der Schraubenfeder reduziert sich in diesem Bereich die vorhandene Federkraft, so dass sich der hinausragende Teil des zweiten Endes der Schraubenfeder leicht in die gewünschte Richtung zwingen lässt.

Die Erfindung wird nachstehend anhand zweier Ausführungsbeispiele näher erläutert. Es zeigen:
- Fig.1 1: Eine Ansicht auf ein erstes, in einer Montageschiene angeordnetes Ausführungsbeispiel der Befestigungsvorrichtung;
- Fig. 2: eine Aufsicht auf ein Hintergreifteil der Befestigungsvorrichtung gemäss des ersten Ausführungsbeispiels entlang der Line II-II in Fig. 1;
- Fig. 3: einen Schnitt durch die Befestigungsvorrichtung entlang der Linie III-III in Fig.1;
- Fig. 4: eine Aufsicht auf ein Niederhalteteil der Befestigungsvorrichtung gemäss des ersten Ausführungsbeispiels entlang der Line IV-IV in Fig. 3;
- Fig. 5: eine Detailansicht auf das Hintergreifteil des ersten Ausführungsbeispiels während der Montage der Befestigungsvorrichtung;
- Fig. 6: eine Aufsicht auf das Hintergreifteil während der Montage der Befestigungsvorrichtung entlang der Line VI-VI in Fig. 5;
- Fig. 7: einen Schnitt durch ein zweites Ausführungsbeispiel der Befestigungsvorrichtung; und
- Fig. 8: eine Aufsicht auf ein Niederhalteteil der Befestigungsvorrichtung gemäss des zweiten Ausführungsbeispiels entlang der Line VIII-VIII in Fig. 7.

Grundsätzlich sind in den Figuren gleiche Teile mit den gleichen Bezugszeichen versehen.

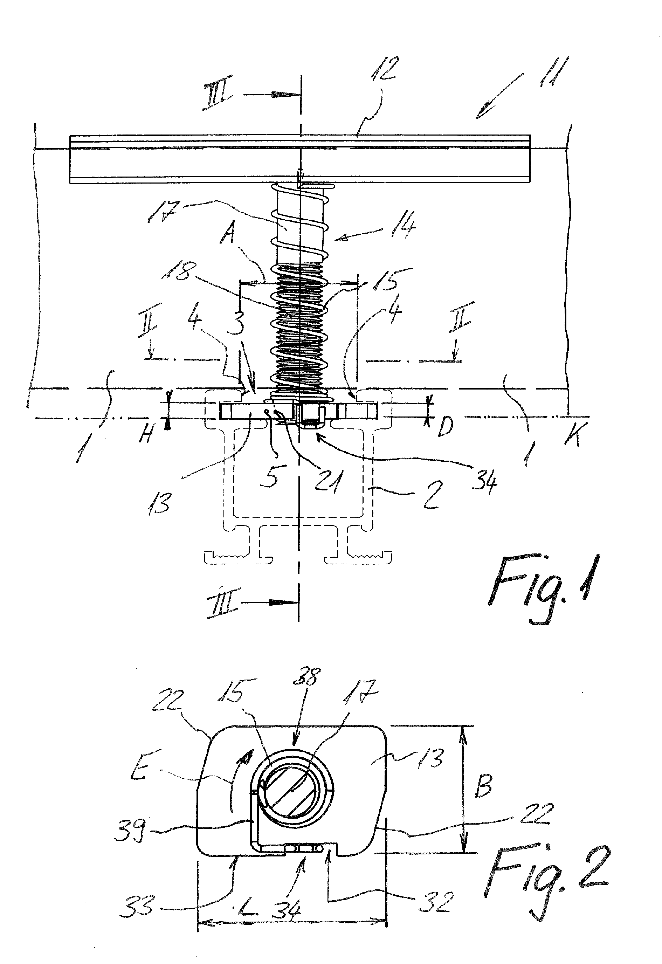

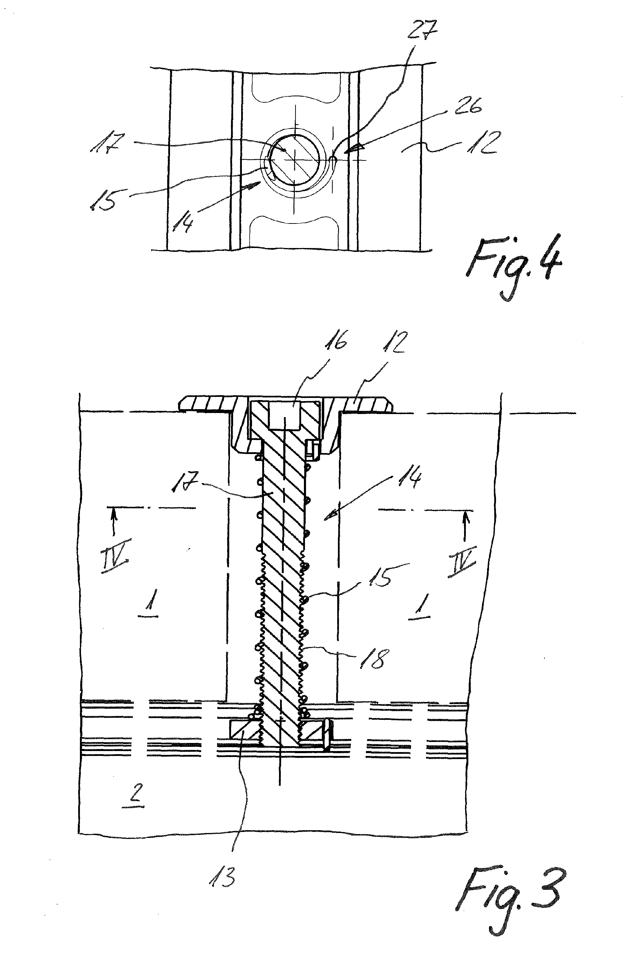

Die Befestigungsvorrichtung 11, wie sie in den Figuren 1 bis 6 dargestellt ist, für die Befestigung von Solarpaneelen 1 an einer Montageschiene 2, die eine von Rändern 4 begrenzte Aufnahmeöffnung 3 einer Aufnahmenut 5 aufweist, umfasst ein Niederhalteelement 12 zum Niederhalten der Solarpaneele 1, ein Hintergreifteil 13, eine Befestigungsschraube 14 und eine Schraubenfeder 15.

Das Hintergreifteil 13 weist eine Breitenerstreckung B auf, die kleiner als eine Längenerstreckung L des Hintergreifteils 13 ausgebildet ist. Die Breitenerstreckung B ist zum Einführen des Hintergreifteils 13 in die Aufnahmenut 5 kleiner als der Abstand A der Ränder 4 der Aufnahmeöffnung 3 der Montageschiene 2 zueinander ausgebildet. Die Längenerstreckung L des Hintergreifteils 13 ist zum Hintergreifen der Ränder 4 der Aufnahmeöffnung 3 nach einer Verdrehung des Hintergreifteils 13 grösser als der Abstand A der Ränder 4 der Aufnahmeöffnung 3 zueinander ausgebildet. Weiter weist das Hintergreifteil 13 eine Dicke D auf, die kleiner als die Höhe H der Aufnahmenut 5 ausgebildet ist. Das Hintergreifteil 13 weist im Grundriss eine im Wesentlichen rechteckige Ausgestaltung auf, wobei zwei einander diagonal gegenüberliegende Ecken 22 zum Verdrehen des Hintergreifteils 13 abgerundet sind.

Die Befestigungsschraube 14 ist frei drehbar an dem Niederhalteelement 12 gelagert. Weiter weist die Befestigungsschraube 14 ein Angriffsmittel 16 für ein Drehmitnahmewerkzeug und einen Schraubenschaft 17 auf, der bereichsweise mit einem Aussengewinde 18 versehen ist. Das Hintergreifteil 13 weist zur lösbaren Festlegung an der Befestigungsschraube 14 eine Öffnung 21 auf, in der ein komplementär zum Aussengewinde 18 der Befestigungsschraube ausgebildetes Innengewinde vorgesehen ist.

Die Schraubenfeder 15 erstreckt sich entlang des Schraubenschafts 17 und ist zwischen dem Niederhalteelement 12 und dem Hintergreifteil 13 angeordnet. Die Schraubenfeder 15 ist zur Übertragung eines Drehmomentes von dem Niederhalteelement 12 auf das Hintergreifteil 13 einerseits an einem ersten Lagerpunkt 26 am Niederhalteelement 12 und anderseits an einem zweiten Lagerpunkt 31 am Hintergreifteil 13 gehalten. Die Wicklung der Schraubenfeder 15 verläuft in Drehrichtung des Aussengewindes 18 der Befestigungsschraube 14. Die Schraubenfeder 15 ist spielfrei beziehungsweise eng anliegend an dem Schraubenschaft 17 angeordnet.

Zur Ausbildung des ersten Lagerpunktes 26 für die Schraubenfeder 15 ist eine Öffnung 27 in Form einer Bohrung in dem Niederhalteelement vorgesehen, in welche ein abgebogenes, erstes Ende 28 der Schraubenfeder 15 eingesteckt ist. Zur Ausbildung des zweiten Lagerpunktes 31 für die Schraubenfeder 15 ist eine Ausnehmung 32 an der Seite 33 entlang der Längserstreckung L an dem Hintergreifteil 13 ausgestanzt, in welche ein abgebogenes, zweites Ende 34 der Schraubenfeder 15 eingreift. Das zweite Ende 34 der Schraubenfeder 15 ist U-förmig ausgebildet. Der die Schenkel 35, 36 verbindende Abschnitt 37 des zweiten Endes 34 der Schraubenfeder 15 ragt über die von dem Hintergreifteil 13 aufgespannte Ebene K hinaus. Die Schenkel 35, 36 liegen zumindest bereichsweise in der Ausnehmung 32 an dem Hintergreifteil 13.

Der benachbart zum Hintergreifteil 13 angeordnete Teil 38 der Schraubenfeder 15 ist spiralförmig flach ausgebildet und weist einen Verbindungsabschnitt 39 aufweist, der in die Abbiegung des zweiten Endes 34 der Schraubenfeder 15 übergeht.

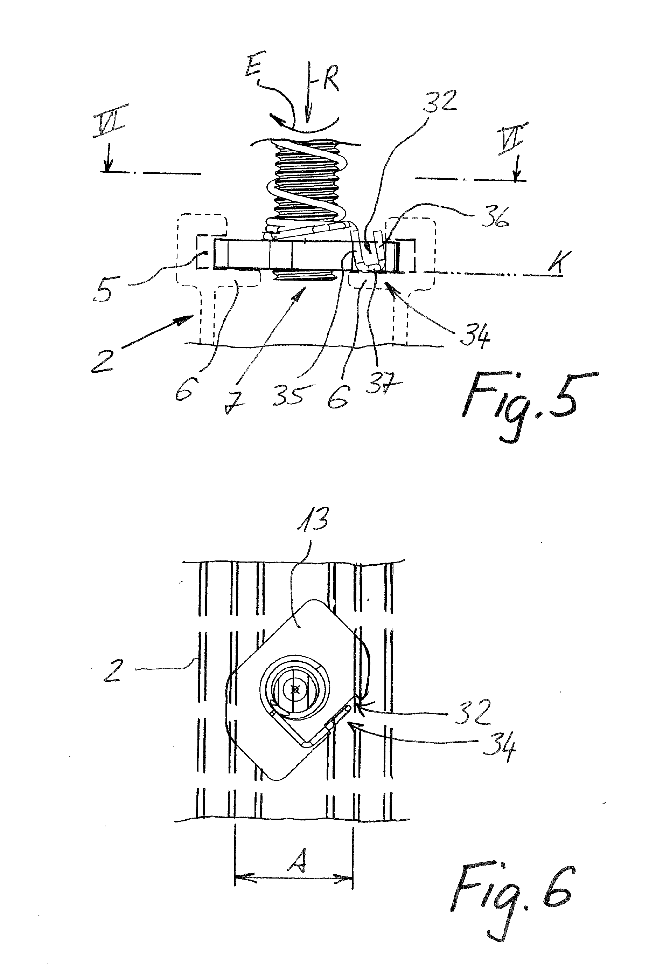

Anhand der Figuren 5 und 6 wird nachfolgend der Montagevorgang der Befestigungsvorrichtung 11 sowie die Funktionsweise der mit dem über die von dem Hintergreifteil 13 aufgespannte Ebene K hinausragende Teil des zweiten Endes 34 der Schraubfeder 15 geschaffene Rückdrehsicherung beschrieben.

Beim Einführen des Hintergreifteils 13 in die Aufnahmenut 5 in Einführrichtung R kommt zuerst der die Ebene K überragende Teil des zweiten Endes 34 der Schraubenfeder 15 mit dem bereichsweise angeordneten Bodenabschnitt 6 der Aufnahmenut 5 in Anlage. Bei einer weiteren Bewegung des Hintergreifteils 13 in Einführrichtung R wird das zweite Ende 34 der Schraubenfeder 15 entgegen der Einführrichtung R gezwungen. Beim anschliessenden Verdrehen des Hintergreifteils 13 mittels des, in den Figuren 5 und 6 nicht dargestellten Niederhalteteils 12, gleitet der die Ebene K überragende Teil des zweiten Endes 34 der Schraubenfeder 15 entlang des entsprechenden Bodenabschnitts 6 der Aufnahmenut 5. Wenn das Hintergreifteil 13 ausreichend verdreht ist, kann der die Ebene K überragende Teil des zweiten Endes 34 der Schraubenfeder 15 wieder in seine Ausgangslage zurückkehren. Anschliessend wird die Befestigungsvorrichtung 11 über die Befestigungsschraube 14 zur Fixierung der Solarpaneele 1 verspannt.

Wird die Befestigungsvorrichtung 11 wieder gelöst, kann das Hintergreifteil 13 höchstens bis zum Anschlag des die Ebene K überragenden Teils des zweiten Endes 34 der Schraubenfeder 15 an dem Rand des Bodenabschnitts 6 der Aufnahmenut 5 zurückdrehen, wobei das Hintergreifteil 13 in dieser Stellung weiterhin die Ränder der Aufnahmeöffnung 3 zumindest bereichsweise hintergreift. Die Befestigungsvorrichtung 11 ist in diesem Montagezustand entlang der Montageschiene 2 verschiebbar und kann an der gewünschten Position an der Montageschiene 2 erneut fixiert werden.

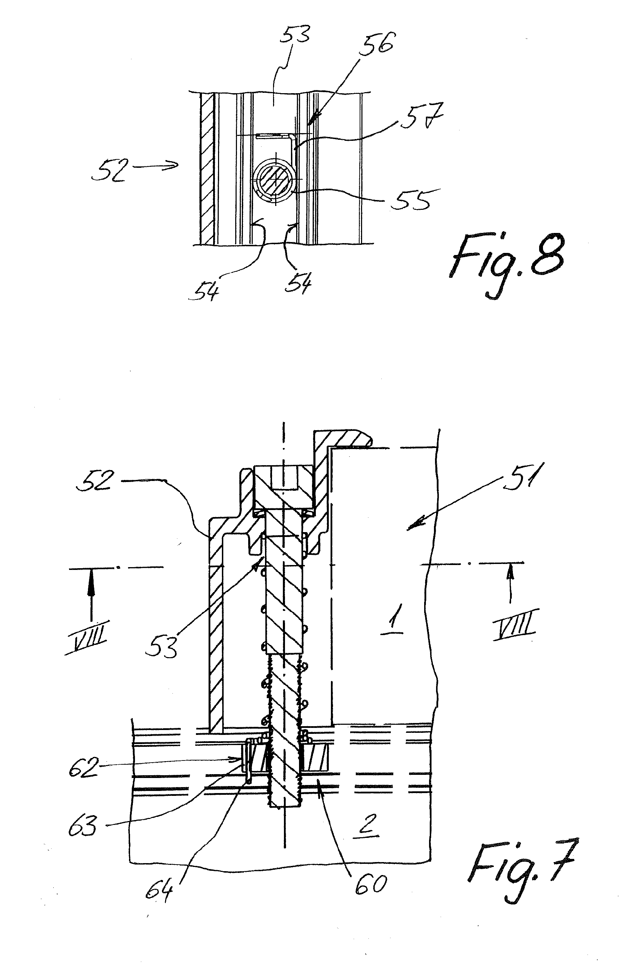

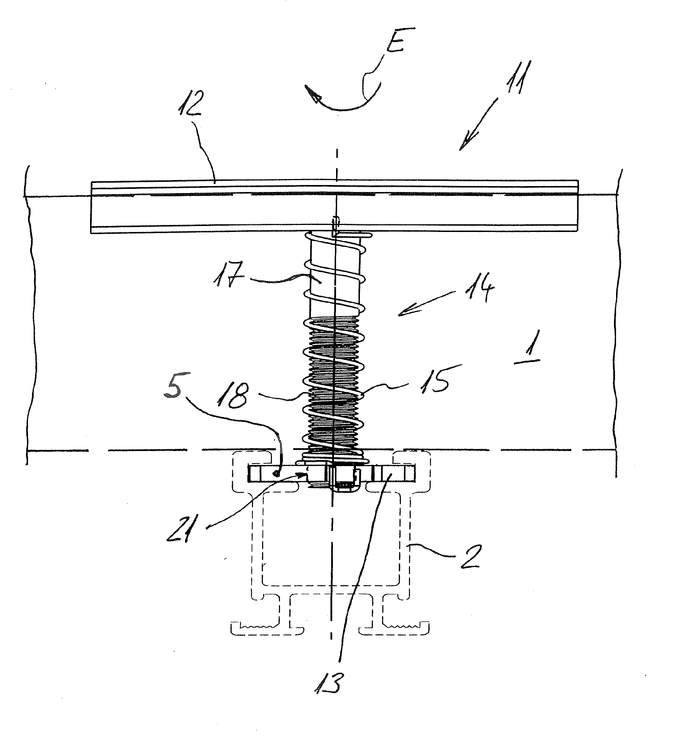

In den Figuren 7 und 8 ist die Befestigungsvorrichtung 51 als zweites Ausführungsbeispiel dargestellt. Die Befestigungsvorrichtung 51 weist ein Niederhalteteil 52 zur endseitigen Fixierung des Solarpaneels 1 an der Montageschiene 2 auf. Weiter unterscheidet sich die Befestigungsvorrichtung 51 von der zuvor beschriebenen Befestigungsvorrichtung 11 lediglich durch die Ausbildung des ersten Lagerpunktes 56 und des zweiten Lagerpunktes 61 der Schraubenfeder 55.

Das Niederhalteteil 52 weist der Schraubenfeder 55 zugewandt einen Aufnahmeraum 53 auf, der sich in Längsrichtung des Niederhalteteils 52 erstreckt und von zwei seitlichen Begrenzungswänden 54 begrenzt wird. Das erste Ende 57 der Schraubenfeder 55 ist derart abgebogen, dass dieses zumindest bereichsweise mit einer der Begrenzungswände 54 in Anlage kommt, wodurch die Schraubenfeder 55 am ersten Lagerpunkt 56 sicher gehalten ist.

Das Hintergreifteil 60 weist an der Seite 62 entlang der Längserstreckung des Hintergreifteils 13 eine gefräste Nut als Ausnehmung 63 für das abgebogene, zweite Ende 64 der Schraubenfeder 55. Die Grösse der Ausnehmung 63 ist derart gewählt, dass das Ende 64 der Schraubenfeder 55 klemmend darin gehalten ist.

## Patentansprüche

1. Befestigungsvorrichtung für die Befestigung von Solarpaneelen (1) an einer Montageschiene (2), die eine von Rändern (4) begrenzte Aufnahmeöffnung (3) einer Aufnahmenut (5) aufweist,
mit einem Niederhalteelement (12; 52) für die Solarpaneele (1),
mit einem Hintergreifteil (13; 60), das an der Montageschiene (2) festlegbar ist und eine Breitenerstreckung (B) aufweist, die grösser als eine Längenerstreckung (L) des Hintergreifteils (13; 60) ausgebildet ist,
mit einer Befestigungsschraube (14), die ein Angriffsmittel (16) und einen Schraubenschaft (17) aufweist, der bereichsweise mit einem Aussengewinde (18) versehen ist und mit einem Innengewinde an einer Öffnung (21) im Hintergreifteil (13; 60) in Eingriff bringbar ist, sowie
mit einer Schraubenfeder (15; 55), die sich entlang des Schraubenschafts (17) erstreckt und zwischen dem Niederhalteelement (12; 52) und dem Hintergreifteil (13; 60) angeordnet ist, **dadurch gekennzeichnet, dass**
die Schraubenfeder (15; 55) an einem ersten Lagerpunkt (26; 56) an dem Niederhalteelement (12; 52) und an einem zweiten Lagerpunkt (31; 61) an dem Hintergreifteil (13; 60) gehalten ist sowie eine in Drehrichtung des Aussengewindes (18) der Befestigungsschraube (14) verlaufende Wicklung aufweist und spielfrei an dem Schraubenschaft (17) angeordnet ist.

2. Befestigungsvorrichtung nach Anspruch 1, **dadurch gekennzeichnet, dass** zur Ausbildung des ersten Lagerpunktes (56) ein Anschlag an dem Niederhalteelement (52) vorgesehen ist, an den ein erstes Ende (57) der Schraubenfeder (55) anliegt.

3. Befestigungsvorrichtung nach Anspruch 1, **dadurch gekennzeichnet, dass** zur Ausbildung des ersten Lagerpunktes (26) eine Öffnung (27) in dem Niederhalteelement (12) ausgebildet ist, in welche ein erstes Ende (28) der Schraubenfeder (15) eingreift.

4. Befestigungsvorrichtung nach einem der Ansprüche 1 bis 3, **dadurch gekennzeichnet, dass** zur Ausbildung des zweiten Lagerpunktes (31; 61) eine Ausnehmung (32; 63) an dem Hintergreifteil (13; 60) ausgebildet ist, in welche ein zweites Ende (34; 64) der Schraubenfeder (15; 55) eingreift.

5. Befestigungsvorrichtung nach Anspruch 4, **dadurch gekennzeichnet, dass** die Ausnehmung (32; 63) an der Seite (33; 62) entlang der Längenerstreckung (L) des Hintergreifteils (13; 60) ausgebildet ist.

6. Befestigungsvorrichtung nach Anspruch 4 oder 5, **dadurch gekennzeichnet, dass** zumindest ein Teil des zweiten Endes (34; 64) der Schraubenfeder (15; 55) über eine von dem Hintergreifteil (13; 60) aufgespannte Ebene (K) hinausragt.

7. Befestigungsvorrichtung nach Anspruch 6, **dadurch gekennzeichnet, dass** das zweite Ende (34) der Schraubenfeder (15) U-förmig ausgebildet ist, wobei der die Schenkel (35, 36) verbindende Abschnitt (37) des zweiten Endes (34) der Schraubenfeder (15) über die von dem Hintergreifteil (13) aufgespannte Ebene (K) hinausragt und wobei die Schenkel (35, 36) bereichsweise in der Ausnehmung (32) an dem Hintergreifteil (13) liegen.

8. Befestigungsvorrichtung nach einem der Ansprüche 4 bis 7, **dadurch gekennzeichnet, dass** ein Teil (38) der Schraubenfeder (15), der benachbart zum Hintergreifteil (13) angeordnet ist, spiralförmig flach ausgebildet ist und einen Verbindungsabschnitt (39) aufweist, der in die Abbiegung des zweiten Endes (34) der Schraubenfeder (55) übergeht.
